# EUROPEAN PATENT SPECIFICATION

(11) **EP 4 145 868 B1**
(45) Date of publication and mention of the grant of the patent: **04.06.2025**
(21) Application number: 21796811.4
(22) Date of filing: 28.04.2021
(51) Int. Cl.: H04W 4/06, H04W 48/14, H04W 48/12, H04W 84/12

(54) **WIRELESS TRANSMISSION METHOD AND APPARATUS, AND NETWORK DEVICE AND STORAGE MEDIUM**
VERFAHREN UND VORRICHTUNG ZUR DRAHTLOSEN ÜBERTRAGUNG SOWIE NETZWERKVORRICHTUNG UND SPEICHERMEDIUM
PROCÉDÉ ET APPAREIL DE TRANSMISSION SANS FIL, ET DISPOSITIF DE RÉSEAU ET SUPPORT DE STOCKAGE

(30) Priority: 29.04.2020 CN 202010354050
(43) Date of publication of application: 08.03.2023
(73) Proprietor: ZTE Corporation, Shenzhen, Guangdong 518057 (CN)
(72) Inventor: CHEN, Daowei, Shenzhen, Guangdong 518057 (CN); XIONG, Gang, Shenzhen, Guangdong 518057 (CN); QIN, Yufeng, Shenzhen, Guangdong 518057 (CN)
(74) Representative: Deambrogi, Edgardo
(86) International application number: PCT/CN2021/090663
(87) International publication number: WO 2021/219025

(56) References cited:
- WO-A2-2006/047065
- CN-A- 104 349 325
- CN-A- 105 474 733
- US-A1- 2015 351 026
- US-A1- 2020 076 552

## Description

### Technical Field

The present invention relates to communications technologies, and in particular, to a wireless transmission method and apparatus, a network device, and a storage medium.

### Background

With the development of the Wi-Fi6 technology, there are more and more Access Points (APs) based on the Wi-Fi6 technology. Generally, one AP is connected to another networking AP using Wi-Fi. A wireless AP generally operates in a traditional mode, that is, the wireless AP includes two modules: a station module backhaul station (bSTA) used for wireless backhaul and a wireless forwarding module fronthaul AP (fAP) used for connecting another AP or subordinating a wireless station STA.

However, in the above conventional mode, when the wireless AP communicates with the STA subordinate to the wireless AP or another networking AP by means of downlink orthogonal frequency division multiple access (DL-OFDMA) or uplink orthogonal frequency division multiple access (UL-OFDMA), the wireless AP cannot concurrently communicate with an uplink networking AP, which affects the utilization efficiency of an air interface. US 2020/076552 A1 relates to "Protocols for multi-access point coordinated multi-user transmissions".

### Summary

The invention is defined by the independent claims. Further embodiments of the invention are defined by the dependent claims.

### Brief Description of the Drawings

One or more embodiments will be exemplarily described by the accompanying drawings in the accompanying drawings, and these exemplary descriptions do not constitute any limitation to the embodiments.
Fig. 1 is a flowchart of a wireless transmission method according to an embodiment of the present invention;
Fig. 2 is a schematic diagram of a network structure of wireless networking according to an embodiment of the present invention;
Fig. 3 is a flowchart of an association of an AP with an uplink device according to an embodiment of the present invention;
Fig. 4 is an interaction flowchart of receiving a packet by an AP0 according to an embodiment of the present invention;
Fig. 5 is an interaction flowchart of transmitting a packet by an AP0 according to an embodiment of the present invention;
Fig. 6 is a schematic diagram of another network structure of wireless networking according to an embodiment of the present invention;
Fig. 7 is an interaction flowchart of receiving a packet by an AP1 according to an embodiment of the present invention;
Fig. 8 is an interaction flowchart of transmitting a packet by an AP1 according to an embodiment of the present invention;
Fig. 9 is a schematic diagram of another network structure of wireless networking according to an embodiment of the present invention;
Fig. 10 is a structural diagram of a wireless transmission apparatus according to an embodiment of the present invention; and
Fig. 11 is a schematic structural diagram of a network device according to an embodiment of the present invention.

### Detailed Description of the Embodiments

To make the objectives, technical solutions, and advantages of the present invention clearer and more comprehensible, the following further describes the present invention in detail with reference to the accompanying drawings and embodiments. It should be understood that the specific embodiments described herein are only intended to explain the present invention, but not to limit the present invention. A person of ordinary skill in the art may understand that, in the embodiments of the present invention, many technical details are put forward to help a reader understand the present invention better. However, even without these technical details and various changes and modifications based on the following embodiments, the claimed technical solutions of the present invention can be implemented. Dividing of the following embodiments is for convenience of description, and shall not constitute any limitation to specific implementations of the present invention.

It should be noted that, although functional module division is performed in a schematic diagram of an apparatus and a logic sequence is shown in a flowchart, in some cases, the shown or described steps may be executed in a module division different from that in the apparatus or in a sequence in the flowchart. The terms "first" and "second" in the description and the drawings are used for distinguishing similar objects, but are not used for describing a specific sequence or order.

Embodiments of the present invention relate to a wireless transmission method, which is applied to a network device, such as a wireless AP. The method comprises: a beacon frame is broadcasted, and a connection with a first device which has scanned the beacon frame is established through a downlink port of the present device; beacon frames broadcasted by a plurality of devices are received in a channel scanning manner, and an uplink device to be connected is determined according to the received plurality of beacon frames; the beacon frame transmitted by the uplink device to be connected carries information indicating that the fusion mode is supported; the fusion mode comprises: when serving as the identity of the uplink device, supporting the communication with the downlink device in a passive trigger manner; a connection with the uplink device is established through the uplink port of the present device; concurrently communication with the downlink device and the uplink device is initiated in an active trigger manner.

The embodiment is further described below with reference to the accompanying drawings.

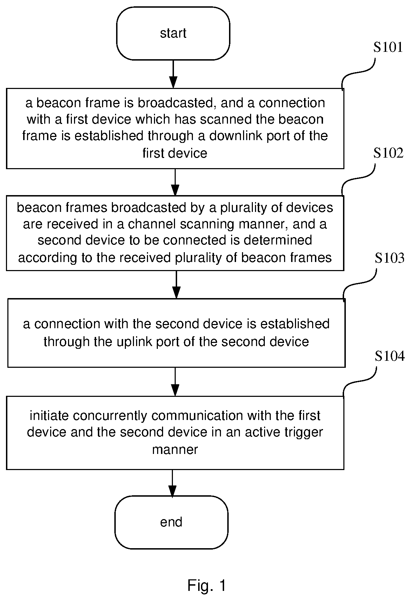

As shown in Fig. 1, The wireless transmission method of the present embodiment includes Steps 101 to 104 below.

Step 101, a beacon frame is broadcasted, and a connection with a first device which has scanned the beacon frame is established through a downlink port of the first device.

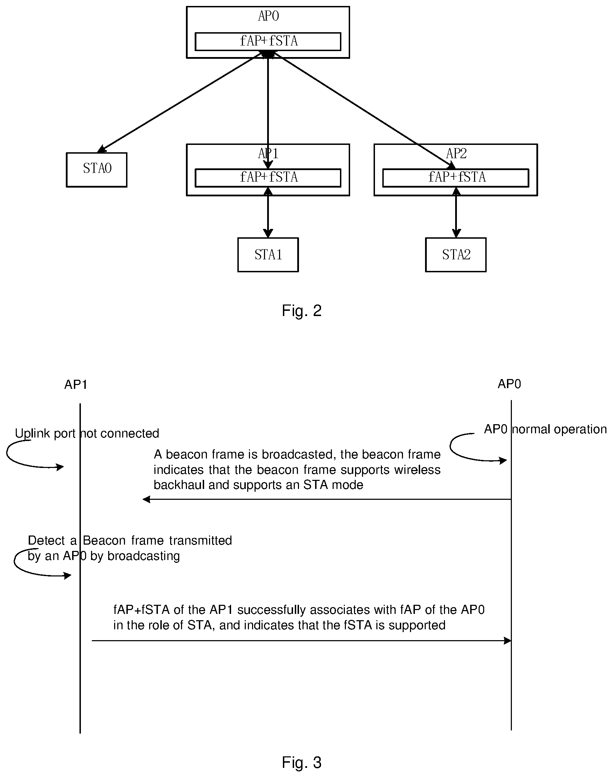

The wireless networking structure of the present embodiment is shown in Fig. 2, wherein AP0 is an uplink AP, AP1 and AP2 are downlink APs of the AP0, and the AP0, the AP1 and the AP2 all operate in a fusion mode; STA0 is an ordinary terminal attached to the AP0, and STA1 and STA2 are ordinary terminals attached to the AP1 and the AP2 respectively. the AP0, the AP1 and the AP2 are all wireless APs.

The following describes an example in which the AP1 serves as an execution entity of the wireless transmission method in present embodiment. During networking, an AP1 broadcasts and transmits a beacon frame to surrounding devices; in the WiFi protocol, the beacon frame that is a beacon frame, refers to a wireless signal used for notifying other devices that can access; and the beacon frame is generally transmitted periodically. In present embodiment, the first device is connected to the AP1 through the downlink port, that is, the first device refers to the downlink device of the AP1.

In an example, after scanning a beacon frame broadcast by a wireless AP, a surrounding terminal device or other APs transmits a connection request to the AP1 at the identity of the downlink device; and after receiving the connection request of the downlink device, the AP1 establishes a connection with the downlink device in response to the connection request transmitted by the downlink device. For example, in Fig. 2, after scanning a beacon frame transmitted by the AP1, an STA1 transmits a connection request to the AP1 in the role of an STA, and the AP1 establishes a connection with the STA1 in response to the connection request of the STA1, wherein the role of the STA means the identity of the downlink device.

Step 102, beacon frames broadcasted by a plurality of devices are received in a channel scanning manner, and a second device to be connected is determined according to the received plurality of beacon frames.

Step 103, a connection with the second device is established through the uplink port of the second device.

Specifically, the AP1 operating in a fusion mode may switch channels to perform scanning, so as to scan beacon frames transmitted by differentAPs on channels corresponding thereto, determine the second device to be connected according to the beacon frames, and then the AP1 establishes a connection with the second device to be connected via an uplink port of the AP1; in present embodiment, the second device is connected to the AP1 through an uplink port, that is, the second device refers to an plink device of the AP1.

As shown in Fig. 2, the AP1 is connected to the AP0 through an uplink port of the AP1, that is, AP0 is an uplink device of AP1. The AP1 can determine an uplink device to be connected according to the detected signal strength of each beacon frame, and the greater the signal strength of the beacon frame is, the better the communication quality between the present device and the device transmitting the Beacon frame is represented. For example, the transmitting device corresponding to the beacon frame with the strongest signal strength may be determined as the uplink device to be connected.

The AP operating in the fusion mode has both functions of a wireless forward-transmitting fAP and a wireless backward-transmitting bSTA. Taking AP1 as an example, when AP1 operates in a fusion mode, the uplink device is AP0, and the downlink device is STA1; after AP1 is connected to AP0 and STA1, packets from AP0 and STA1 can be received through an uplink, and at the same time, packets can also be transmitted to AP0 and STA1 through a downlink.

In an example, a process in which AP1 is wirelessly associated with an uplink device is shown in Fig. 3. The AP0 broadcasts and transmits a beacon frame in a normal working state, indicating that the AP0 supports wireless backhaul and performs communication with an AP node operating in a fusion mode (namely, performing communication by means of an fSTA function in the fAP + fSTA). The AP1 is in a working state in which an uplink port is not connected, and when the AP1 detects beacon frames broadcasted by a plurality of surrounding wireless devices, it is determined that an uplink device to be connected is selected from the plurality of wireless devices according to the plurality of beacon frames; a transmitting device corresponding to a beacon frame with the strongest signal strength may be selected as the uplink device to be connected. As shown in Fig. 2, the AP0 is the uplink device to be connected; when the AP1 receives a beacon frame broadcasted by the AP0, the AP1 first transmits a message indicating that the AP1 supports a fusion mode to the AP0, that is, notifying the uplink device AP0 that the AP1 serving as the downlink device can initiate communication with the uplink device AP0 in an active triggering manner. Then, the AP1 in the fusion mode uses the STA role to associate with the AP0, that is, the AP1 establishes a connection with the AP0 through the uplink port. fAP + fSTA in Fig. 2 represents a fusion mode.

Step 104, initiate concurrently communication with the first device and the second device in an active trigger manner.

Specifically, after the AP1 establishes a connection with the AP0 and the downlink device, the AP1 can actively trigger communication with the uplink device while communicating with the downlink device. The downlink device may be another AP or a attached terminal device such as the STA1.

In the example of Fig. 2, when needing to communicate with an uplink device and a downlink device, the AP1 firstly obtains a channel resource in an air interface contention manner, and then, based on the channel resource obtained by contention, receives a packet from the uplink device AP0 and the downlink device STA1 through an uplink, or transmits a packet to the uplink device AP0 and the downlink device STA1 through a downlink; in this way, concurrently communication with the downlink device and the uplink device is implemented.

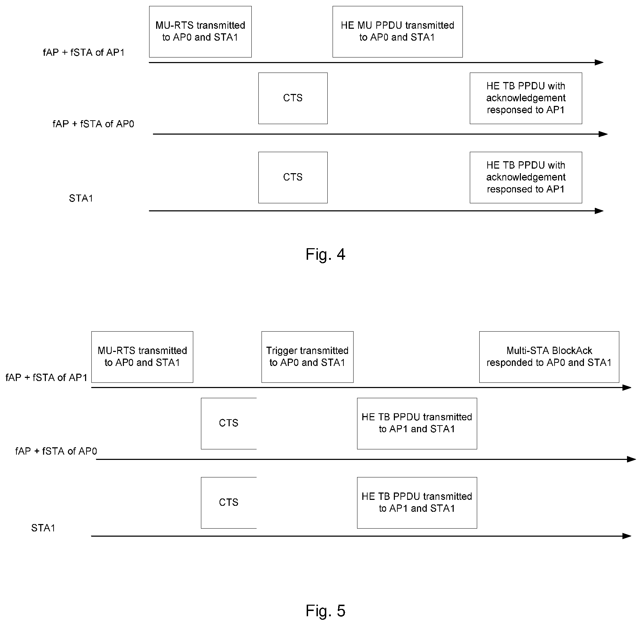

The following describes how AP1 actively triggers communication with AP0 and transmits packets to AP0 and STA1, as shown in Fig. 4.

When AP1 transmits a packet to STA1 through DL-OFDMA, the associated AP0 may participate in the DL-OFDMA to receive the packet. Specifically, when AP1 needs to transmit packets to AP0 and STA1 at the same time, AP1 obtains a transmitting opportunity according to an air interface contention manner, and then broadcasts MU-RTS packets to AP0 and STA1 according to a DL-OFDMA flow of Wi-Fi6; AP0 and STA1 respectively respond to corresponding CTS packets; then AP1 transmits packets to AP0 and STA1 at the same time through an HE MU PPDU; and AP0 and STA1 respectively respond to AP1 through an HE TB PPDU with an Acknowledgement, so that AP1 completes transmitting downlink packets to AP0 and STA1 at the same time. In this example, AP1 and AP0 both work in the fusion mode.

The following describes how AP1 actively triggers communication with AP0 and receives packets from AP0 and STA1, as shown in Fig. 5.

When the AP1 receives a packet from STA1 through UL-OFDMA, the uplink AP0 may participate in UL-OFDMA to transmit the packet. Specifically, when AP1 needs AP0 and STA1 to transmit packets at the same time, AP1 obtains a transmitting opportunity according to an air interface contention manner, and then broadcasts MU-RTS packets to AP0 and STA1 according to a UL-OFDMA flow of Wi-Fi6; AP0 and STA1 respectively respond to corresponding CTS packets; then AP1 broadcasts Trigger to AP0 and STA1 through HE MU PPDU; AP0 and STA1 respectively transmit HE TB PPDU packets to AP1; and AP1 responds to AP0 and STA1 by transmitting Multi-STA BlockAck packets. In this way, AP1 completes receiving uplink packets transmitted by AP0 and STA1 at the same time. In this example, AP1 and AP0 both work in the fusion mode.

It should be noted that, the above examples in present embodiment are all examples for easy understanding, and do not limit the technical solutions of the present invention.

In the present embodiment, an AP node is connected to an uplink AP node and a downlink AP node or a attached terminal in a fusion mode, and when the AP node serves as a downlink AP node in the fusion mode, communication with the uplink AP node and communication with the downlink AP node or the attached terminal can be actively triggered. Meanwhile, when the AP node serves as an uplink AP node, communication can be passively triggered by the downlink AP node or the attached terminal, thereby achieving concurrently communication with the uplink AP node and the downlink AP node or the attached terminal, and improving the utilization efficiency of an air interface.

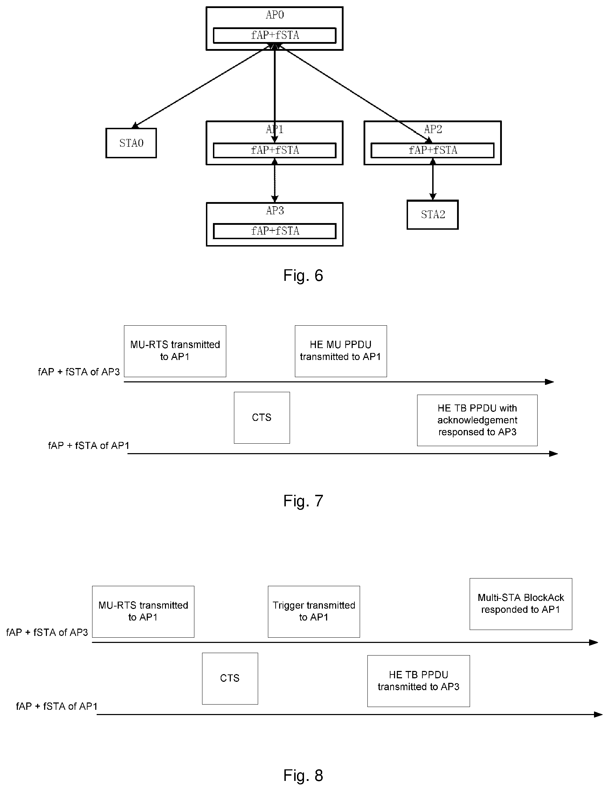

Embodiments of the present invention also relate to a wireless transmission method. The difference from the described embodiments is that the wireless networking structure of the present embodiment is as shown in Fig. 6, and an AP3 operating in a fusion mode is further connected to an AP1 operating in a fusion mode. fAP + fSTA in Fig. 6 represent the fusion mode.

The embodiment is further described below with reference to the accompanying drawings.

As shown in Fig. 6, AP1 is connected to AP0 and AP3 at the same time, wherein the AP0 is an uplink device of the AP1 and the AP1 is connected to the AP0 through an uplink port of the AP1; the AP3 is the downlink device of the AP1, and the AP1 is connected to the AP3 through the downlink port of the AP1. After the AP1 broadcasts the beacon frame carrying the message indicating that the fusion mode is supported, the AP3 learns from the beacon frame that the AP1 supports the fusion mode. Then, after receiving the request for connection transmitted by the AP3, the AP1 establishes a connection with the AP3. The request connection transmitted by the AP3 carries information indicating that the fusion mode is supported.

Because the AP1 works in the fusion mode, it supports being passively triggered to the communication with the downlink device, that is, under a condition that being triggered by the downlink device AP3, the AP1can communicate with the downlink device AP3.

The following describes how the AP1 is triggered by the AP3 to communicate and receives packets from the AP3, referring to Fig. 7.

When the AP3 needs to transmit a packet to the AP1, the AP3 first obtains a transmitting opportunity according to an air interface contention manner, then broadcasts an multi-user request to transmit ( MU-RTS , a control packet of Wi-Fi6, indicating request transmitting, which is the same as follows) packet to the AP1 according to a DL-OFDMA flow in a wifi protocol, the AP1 responds with a corresponding clear to transmit (CTS, a control packet in a Wi-Fi6 protocol, indicating that transmitting is allowed) packet, then the AP3 transmits a downlink packet to the AP1 through the high efficiency multi-user physical layer protocol data unit(HE MU PPDU, an AP in a Wi-Fi6 protocol carries packets transmitted by a plurality of users), and the AP1 responds to the AP3 through the high efficiency trigger-based physical layer protocol data unit(HE TB PPDU, packet based trigger carrying single user data for Wi-Fi6) with an acknowledgement (an acknowledgement information of Wi-Fi6), thus, the AP1 completes being triggered by the AP3 and receiving a packet from the AP3. In this example, both the AP3 and the AP1 work in the fusion mode.

The following describes how AP1 is triggered by AP3 to communicate and transmits a packet to AP3, referring to Fig. 8.

When the AP3 needs to receive a packet from the AP1, the AP3 first obtains a transmitting opportunity according to an air interface contention manner, then broadcasts a MU-RTS packet to the AP1 according to a UL-OFDMA flow of the Wi-Fi6, the AP1 responds to a corresponding CTS packet, then the AP3 broadcasts a Trigger (a trigger packet of the Wi-Fi6) packet to the AP1 through the HE MU PPDU, the AP1 transmits a HE TB PPDU packet to the AP3, and the AP3 responds to the AP1 by transmitting a Multi-STA BlockAck (a plurality of STA block acknowledgement information in a Wi-Fi6 protocol) packet, thus the AP1 completes being triggered by the AP3 and transmits a packet to the AP3. In this example, both the AP3 and the AP1 work in the fusion mode.

It should be noted that, the above examples in present embodiment are all examples for easy understanding, and do not limit the technical solutions of the present invention.

In present embodiment, in the fusion mode, the AP1 serving as the uplink device can be triggered by the downlink device AP3 to implement communication. That is, the AP working in the fusion mode not only has the capability of actively triggering the uplink device to perform communication, but also has the capability of being triggered by the downlink device to perform communication, thereby achieving concurrently communication with the uplink AP node, the downlink AP node or the attached terminal, and improving the utilization efficiency of the air interface.

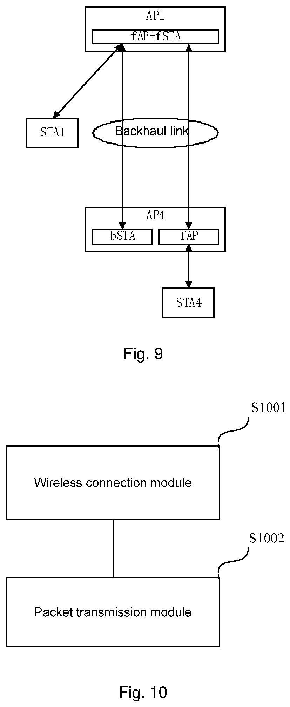

Embodiments of the present invention also relate to a wireless transmission method. The difference from the described embodiments is that, in the embodiments, the identity of a wireless AP operating in a fusion mode is an uplink device, and the downlink device operates in a traditional mode, comprising a bSTA module with a wireless backhaul function and a fAP module with a wireless forwarding function. A networking structure in present embodiment is shown in Fig. 9, where AP1 operates in the fusion mode, and fAP+fSTA in Fig. 9 represent the fusion mode. the AP4 operates in the traditional mode, where STA1 is a terminal device mounted to the AP1, and STA2 is a terminal device mounted to AP4.

Specifically, in the networking structure of present embodiment, since AP4, which is a downlink device, operates in the traditional mode, two links exist between the AP1 and the AP4. If two networking APs transmit and receive at the same time, a packet loop may occur, therefore, the AP1 and the AP4 need to compete to obtain a unique packet transmit-receiving opportunity through an air interface. Before the AP1 is associated with the AP4, after the AP1 receives information that indicates the fusion mode is not supported from the AP4, the AP4 scans a beacon frame of the AP1 in a channel scanning manner, that is, the beacon frame transmitted when the AP1 is in operation of the uplink device in present embodiment.

The packet transmit-receiving process between the AP1 and the AP4 in present embodiment is further described below by taking the networking structure in Fig. 9 as an example, and the packet transmit-receiving process specifically includes the following steps S1 to S6.

Step S1, the AP1 is ready, and broadcasts through a beacon frame to indicate that the AP1 supports a fAP + fSTA mode, that is, supports the fusion mode.

Step S2, the bSTA of the AP4 successfully associates with the fAP of AP1 in the STA role.

Step S3, the AP1 successfully associates with the fAP of AP4 in the fSTA role.

The bSTA, the STA, the fSTA, or the fAP may be understood as a role in which the device is currently located.

That is to say, the bSTA from the fAP of AP1 to AP4 is the first communication link, and the fSTA from the fAP of AP4 to AP1 is the second communication link, that is, there are two communication links between the AP1 and the AP4.

Step S4: the AP1 and the AP4 perform air interface contention.

If the AP1 obtains a packet transmit-receiving opportunity, step S5 is executed; if the AP4 obtains a packet transmit-receiving opportunity, step S6 is executed.

Step S5, the AP1 transmitting a packet to the bSTA of the AP4 through DL-OFDMA; or receive a packet of the bSTA of the AP4 through UL-OFDMA.

Step S6, the AP4 transmitting a packet to the fSTA of the AP1 through DL-OFDMA; or receive a packet of the STA of AP1 through UL-OFDMA.

In present embodiment, because two communication links exist between AP1 and AP4, that is, the fAP of AP1 may transmit a packet to the bSTA of AP4 through the first communication link, and the fAP of AP4 may transmit a packet to the fSTA of AP1 through the second communication link. In this way, the packet may be looped back between the two communication links, that is, after being transmitted to the AP4 through the first communication link by the AP1, the packet is transmitted to the AP1 through the second communication link by the AP4. Therefore, an additional mechanism needs to be set to prevent the packet from being looped back as much as possible.

In the present embodiment, the wireless AP working in the fusion mode may also be connected to a traditional AP, that is, an AP working in the traditional mode. The traditional mode means that the wireless AP includes two modules: a station module bSTA for wireless backhaul and a wireless forwarding module fAP for connecting another AP or a subordinate wireless station STA.

Step division of the described various methods is only for describing clearly, and during implementation, the methods may be combined into one step or some steps are split into a plurality of steps, and all the steps are within the scope of protection of the present invention as long as they comprise the same logic relationship; it is within the scope of protection of the present invention to add modifications to or introduce a design into an algorithm or a process without changing the core design of the algorithm and the process.

Embodiments of the present invention also relate to a wireless transmission apparatus. The structure of the wireless transmission apparatus in the embodiment is shown in Fig. 10, comprising:
A wireless connection module 1001, configured to broadcast a beacon frame, and establish a connection with a downlink device which has scanned the beacon frame through a downlink port of the present device; receive beacon frames broadcasted by a plurality of devices through channel scanning, and determine an uplink device according to the received plurality of beacon frames; a beacon frame transmitted by an uplink device carries target information indicating that the uplink device supports initiating data transmission in a passive trigger manner; establish a connection with the uplink device through the uplink port of the present device;
The packet transmission module 1002 is configured to initiate data transmission with the downlink device and the uplink device in an active trigger manner.

In an example, the packet transmission module 1002 is further configured to obtain a channel resource in an air interface contention manner, and concurrently communicate with a downlink device and an uplink device based on the channel resource.

In an example, the wireless connection module 1001 is further configured to transmit information indicating that a fusion mode is supported to the uplink device, where the fusion mode further includes: when serving as the identity of the downlink device, supporting to initiate communication with the uplink device in an active trigger manner.

In an example, the wireless connection module 1001 is further configured to communicate with the downlink device under active triggering of the downlink device. The beacon frame broadcasted by the present device carries the information indicating that the fusion mode is supported.

In an example, the wireless connection module 1001 is further configured to receive a connection request from the downlink device scanned the beacon frame; establish a connection with the downlink device that scanned to the beacon frame in response to the connection request.

It is easily found that present embodiment is a system embodiment corresponding to the foregoing method embodiment, and present embodiment and the foregoing method embodiment may be implemented in cooperation. Related technical details mentioned in the foregoing method embodiments are still valid in present embodiment, and are not described herein again to reduce repetition. Correspondingly, related technical details mentioned in present embodiment may also be applied in the foregoing method embodiments.

It should be noted that all modules involved in the present embodiment are logic modules. In a practical application, one logic unit may be one physical unit or a part of one physical unit, and may also be implemented by using a combination of a plurality of physical units. In addition, in order to highlight the inventive part of the present invention, no units less closely related to solving the technical problem proposed by the present invention are introduced in present embodiment, but this does not mean that there are no other units in present embodiment.

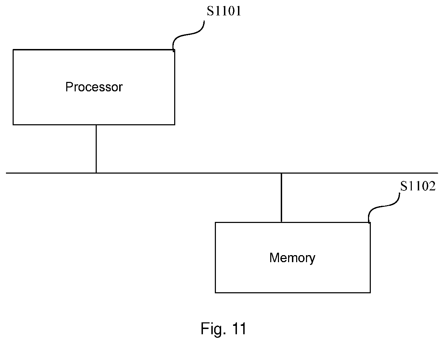

Embodiments of the present invention also relate to a terminal. As shown in Fig. 11, the terminal comprises at least one processor 1101; and, at least one memory 1102; the memory 1102 stores an instruction that may be executed by the at least one processor 1101. When the instruction is executed by the at least one processor 1101, the at least one processor 1101 can execute the wireless transmission method in the foregoing embodiment.

The memory 1102 and the processor 1101 are connected in a bus manner, where the bus may include any number of interconnected buses and bridges, and the bus connects various circuits of the one or more processors 1101 and the memory 1102 together. The bus may also connect a variety of other circuits, such as peripheral devices, voltage regulators, and power management circuitry, which are well known in the art and therefore are not described further herein. The bus interface provides an interface between the bus and the transceiver. The transceiver may be one element or multiple elements, such as multiple receivers and transmitters, that provide means for communicating with various other devices over a transmission medium. Data processed by the processor 1101 is transmitted over a wireless medium through an antenna, which further receives the data and transmits the data to the processor 1101.

The processor 1101 is responsible for managing a bus and general processing, and can further provide various functions, including timing, peripheral interfaces, voltage regulation, power management, and other control functions. And the memory 1102 may be used to store data used by the processor 1101 in performing operations.

Embodiments of the present invention also relate to a computer readable storage medium, which stores a computer program. The computer program may be executed by a processor to implement the described method embodiments.

That is, a person skilled in the art may understand that all or a part of the steps in the foregoing method embodiments may be implemented by a program instructing relevant hardware. The program is stored in a storage medium and includes several instructions, so as to enable a device (which may be a single chip, a chip, or the like) or a processor to execute all or a part of the steps of the methods described in the embodiments of the present invention. The storage medium includes any medium that is capable of storing program codes, such as a USB flash disk, a removable hard disk, a Read-Only Memory (ROM), a Random Access Memory (RAM), a magnetic disk, or an optical disk.

An embodiment of the present invention provides a working mode of a network device. When the network device works as a wireless node to perform networking, the network device operates in a fusion mode, and connects to a downlink device that also supports the fusion mode, that is, the uplink device supports communication with the downlink device in a passive trigger manner; in this way, the wireless node can implement concurrently communication with the uplink device and the downlink device, thereby improving the utilization efficiency of the air interface.

In addition, the wireless AP operating in the fusion mode competes for an air interface with the identity of the uplink device, thereby actively triggering concurrently communication with the uplink device and the downlink device; an AP can actively trigger concurrently communication with the uplink device and the downlink device in a fusion mode based on an existing mechanism of actively triggering communication, which is not only simple and easy to implement, but also can reduce research and development costs as much as possible because no new implementation needs to be developed.

Furthermore, on the premise that the network structure does not change, the AP supporting the fusion mode as the downlink device can actively trigger communication with the uplink device, and in cooperation with the characteristic of concurrently communication with the uplink device and the downlink device, the application scenario of the AP running in the fusion mode is more flexible.

In addition, the wireless AP in the embodiment of the present invention can have both the identity of the uplink device and the downlink device, and can be applied to different network structures more flexibly.

Furthermore, when the AP operating in the fusion mode in present embodiment is connected to an AP operating in a traditional mode, normal data transmission can also be ensured by declaring the support mode, which is compatible with an existing network structure and network device, thereby reducing development costs.

Although the invention has been explained in relation to its preferred embodiment(s) as mentioned above, it is to be understood that many other possible modifications and variations can be made without departing from the scope of the present invention, which is defined by the claims.

## Claims

1. A method for wireless transmission, comprising:
broadcasting (101), by a present device, a beacon frame, and establishing, via a downlink port of the present device, a connection with a first device which has scanned the beacon frame;
receiving (102), by the present device, beacon frames broadcasted by a plurality of devices in a channel scanning manner, and determining a second device to be connected according to the received plurality of beacon frames; wherein a beacon frame broadcasted by the second device to be connected carries information indicating that a fusion mode is supported; the fusion mode comprises: when serving as an uplink identity, the second device supports being passively triggered to communicate with a device serving as a downlink identity, whereby under a condition that the second device is triggered by the device serving as a downlink identity, the second device can communicate with the device serving as a downlink identity;
wherein the present device and the second device are Wi-Fi access points;
establishing (103), by the present device, a connection with the second device through an uplink port of the present device; and
initiating (104), by the present device, concurrently communication with the first device and the second device in an active trigger manner.

2. The method for wireless transmission according to claim 1, wherein initiating, by the present device, concurrently communication with the first device and the second device in an active trigger manner comprises:
acquiring channel resources in an air interface contention manner, and concurrently communicating with the first device and the second device based on the channel resources.

3. The method for wireless transmission according to claim 1, further comprising:
before establishing the connection with the second device through the uplink port of the present device, transmitting a information indicating that the fusion mode is supported to the second device, wherein the fusion mode further comprises: when serving as a downlink identity, the present device supports being actively triggered to initiate communication with a device served as an uplink identity .

4. The method for wireless transmission according to claim 1, wherein the beacon frame broadcasted by the present device carries information indicating that the fusion mode is supported;
the method further includes: under a condition that being actively triggered by the first device, communicating with the first device.

5. The method for wireless transmission according to claim 4, further comprising:
after broadcasting the beacon frame, and before establishing the connection with the first device which has scanned the beacon frame through the downlink port of the present device, receiving information that carries the indication of supporting the fusion mode from the first device.

6. The method for wireless transmission according to claim 1, further comprising:
after broadcasting the beacon frame, and before establishing the connection with the first device which has scanned the beacon frame through the downlink port of the present device, receiving information that carries the indication of supporting the traditional mode from the first device.

7. The method for wireless transmission according to claim 6, further comprising:
after establishing the connection with the first device which has scanned the beacon frame through the downlink port of the present device, scanning a beacon frame which is broadcasted by the second device that serves as an uplink identity in a channel scanning manner;
establishing a connection with the second device that serves as an uplink identity through the uplink port.

8. A network device, comprising:
at least one processor (1101); and ,
at least one memory (1102); wherein,
the memory (1102) stores an instruction that can be executed by the at least one processor (1101), and when the instruction is executed by the at least one processor (1101), the at least one processor (1101) is enabled to execute the wireless transmission method as claimed in any one of claims 1 to 7.

9. A computer readable storage medium, storing a computer program, when the computer program is executed by a processor to implement the wireless transmission method as claimed in any one of claims 1 to 7.

## Patentansprüche

1. Verfahren zur drahtlosen Übertragung, umfassend:
Senden (101), durch eine vorhandene Vorrichtung, eines Beacon-Frames und Herstellen, über einen Downlink-Port der vorhandenen Vorrichtung, einer Verbindung mit einer ersten Vorrichtung, die den Beacon-Frame gescannt hat;
Empfangen (102), durch die vorhandene Vorrichtung, Beacon-Frames, die von einer Vielzahl von Vorrichtungen im Kanal-Scannen-Modus gesendet wurden, und Bestimmen einer zweiten Vorrichtung, die nach der empfangenen Vielzahl von Beacon-Frames verbunden werden soll; wobei ein Beacon-Frame, der von der zweiten zu verbindenden Vorrichtung gesendet wurde, Informationen enthält, die angeben, dass ein Fusionsmodus unterstützt wird; wobei der Fusionsmodus umfasst: unter der Bedingung, dass sie als Uplink-Identität dient, unterstützt die zweite Vorrichtung, passiv dazu angeregt zu werden, mit einer Vorrichtung zu kommunizieren, die als Downlink-Identität dient, sodass die zweite Vorrichtung mit der Vorrichtung, die als Downlink-Identität dient, kommunizieren kann, wenn die zweite Vorrichtung durch die Vorrichtung, die als Downlink-Identität dient, angeregt wird;
wobei die vorhandene Vorrichtung und die zweite Vorrichtung Wi-Fi-Zugangspunkte sind;
Herstellen (103), durch die vorhandene Vorrichtung, einer Verbindung mit der zweiten Vorrichtung über einen Uplink-Port der vorhandenen Vorrichtung; und
Initiieren (104), durch die vorhandene Vorrichtung, einer gleichzeitigen Kommunikation mit der ersten Vorrichtung und der zweiten Vorrichtung in einem aktiven Anregungsmodus.

2. Verfahren zur drahtlosen Übertragung nach Anspruch 1, wobei das Initiieren, durch die vorhandene Vorrichtung, einer gleichzeitigen Kommunikation mit der ersten Vorrichtung und der zweiten Vorrichtung in einem aktiven Anregungsmodus umfasst:
Erfassen Kanalressourcen in einem Luftschnittstellen-Konkurrenzsituationmodus und Kommunizieren gleichzeitig mit der ersten Vorrichtung und der zweiten Vorrichtung basierend auf den Kanalressourcen.

3. Verfahren zur drahtlosen Übertragung nach Anspruch 1, ferner umfassend:
vor dem Herstellen der Verbindung mit der zweiten Vorrichtung über den Uplink-Port der vorhandenen Vorrichtung, Übertragen einer Information an die zweite Vorrichtung, die angibt, dass der Fusionsmodus unterstützt wird, wobei der Fusionsmodus ferner umfasst: unter der Bedingung, dass sie als Downlink-Identität dient, unterstützt die vorhandene Vorrichtung, aktiv dazu angeregt zu werden, eine Kommunikation mit einer Vorrichtung zu initiieren, die als Uplink-Identität dient.

4. Verfahren zur drahtlosen Übertragung nach Anspruch 1, wobei der Beacon-Frame, der von der vorhandenen Vorrichtung gesendet wurde, Informationen enthält, die angeben, dass der Fusionsmodus unterstützt wird;
das Verfahren ferner umfasst: unter der Bedingung, dass eine aktive Anregung durch die erste Vorrichtung vorhanden ist, Kommunizieren mit der ersten Vorrichtung.

5. Verfahren zur drahtlosen Übertragung nach Anspruch 4, ferner umfassend:
nach dem Senden des Beacon-Frames und vor dem Herstellen der Verbindung mit der ersten Vorrichtung, die den Beacon-Frame gescannt hat, über den Downlink-Port der vorhandenen Vorrichtung, Empfangen einer Information, die die Angabe enthält, den Fusionmodus von der ersten Vorrichtung zu unterstützen.

6. Verfahren zur drahtlosen Übertragung nach Anspruch 1, ferner umfassend:
nach dem Senden des Beacon-Frames und vor dem Herstellen der Verbindung mit der ersten Vorrichtung, die den Beacon-Frame gescannt hat, über den Downlink-Port der vorhandenen Vorrichtung, Empfangen einer Information von der ersten Vorrichtung, die eine Angabe enthält, den traditionellen Modus zu unterstützen..

7. Verfahren zur drahtlosen Übertragung nach Anspruch 6, ferner umfassend:
nach dem Herstellen der Verbindung mit der ersten Vorrichtung, die den Beacon-Frame über den Downlink-Port der vorhandenen Vorrichtung gescannt hat, Scannen eines Beacon-Frames, der von der zweiten Vorrichtung gesendet wurde, die als Uplink-Identität dient, im Kanal-Scannen-Modus;
Herstellen einer Verbindung mit der zweiten Vorrichtung, die als Uplink-Identität dient, über den Uplink-Port.

8. Netzwerkvorrichtung, umfassend:
mindestens einen Prozessor (1101); und
mindestens einen Speicher (1102);
wobei der Speicher (1102) eine Anweisung speichert, die von dem mindestens einen Prozessor (1101) ausgeführt werden kann, und wobei der mindestens eine Prozessor (1101), wenn die Anweisung von mindestens einem Prozessor (1101) ausgeführt wird, das Verfahren zur drahtlosen Übertragung nach einem der Ansprüche 1 bis 7 ausführen kann.

9. Computerlesbares Speichermedium, das ein Computerprogramm speichert, wobei das Computerprogramm von einem Prozessor ausgeführt wird, um das Verfahren zur drahtlosen Übertragung nach einem der Ansprüche 1 bis 7 zu implementieren.

## Revendications

1. Procédé de transmission sans fil, comprenant:
la diffusion (101), par un dispositif présent, d'une trame de balise, et l'établissement, via un port de liaison descendante du dispositif présent, d'une connexion avec un premier dispositif ayant scanné ladite trame de balise;
la réception (102), par le dispositif présent, de trames de balise diffusées par une pluralité de dispositifs selon un mode de balayage de canal, et la détermination d'un second dispositif à connecter en fonction de la pluralité de trames de balise reçues; où la trame de balise diffusée par le second dispositif à connecter contient des informations indiquant qu'un mode de fusion est pris en charge; le mode de fusion comprenant: lorsque le second dispositif sert d'identité montante, il prend en charge le fait d'être déclenché passivement pour communiquer avec un dispositif servant d'identité descendante, de sorte que, sous la condition où le second dispositif est déclenché par le dispositif servant d'identité descendante, le second dispositif peut communiquer avec le dispositif servant d'identité descendante;
où le dispositif présent et le second dispositif sont des points d'accès Wi-Fi;
l'établissement (103), par le dispositif présent, d'une connexion avec le second dispositif via un port de liaison montante du dispositif présent; et
l'initiation (104), par le dispositif présent, d'une communication simultanée avec le premier dispositif et le second dispositif selon un mode de déclenchement actif.

2. Le procédé de transmission sans fil selon la revendication 1, dans lequel l'initiation, par le dispositif présent, d'une communication simultanée avec le premier dispositif et le second dispositif selon un mode de déclenchement actif comprend:
l'acquisition de ressources de canal selon un mode de contention d'interface aérienne, et la communication simultanée avec le premier dispositif et le second dispositif sur la base desdites ressources de canal.

3. Le procédé de transmission sans fil selon la revendication 1, comprenant en outre:
avant l'établissement de la connexion avec le second dispositif via le port de liaison montante du dispositif présent, la transmission d'une information indiquant que le mode de fusion est pris en charge au second dispositif, le mode de fusion comprenant en outre: lorsque le dispositif présent sert d'identité descendante, le dispositif présente prend en charge le fait d'être activement déclenché pour initier une communication avec un dispositif servant d'identité montante.

4. Le procédé de transmission sans fil selon la revendication 1, dans lequel la trame de balise diffusée par le dispositif présent contient des informations indiquant que le mode de fusion est pris en charge;
le procédé comprenant en outre: sous la condition d'être activement déclenché par le premier dispositif, la communication avec le premier dispositif.

5. Le procédé de transmission sans fil selon la revendication 4, comprenant en outre:
après la diffusion de la trame de balise, et avant l'établissement de la connexion avec le premier dispositif ayant scanné ladite trame de balise via le port de liaison descendante du dispositif présent, la réception d'une information contenant l'indication de la prise en charge du mode de fusion provenant du premier dispositif.

6. Le procédé de transmission sans fil selon la revendication 1, comprenant en outre:
après la diffusion de la trame de balise, et avant l'établissement de la connexion avec le premier dispositif ayant scanné ladite trame de balise via le port de liaison descendante du dispositif présent, la réception d'une information contenant l'indication de la prise en charge du mode traditionnel provenant du premier dispositif.

7. Le procédé de transmission sans fil selon la revendication 6, comprenant en outre:
après l'établissement de la connexion avec le premier dispositif ayant scanné la trame de balise via le port de liaison descendante du dispositif présent, le balayage d'une trame de balise diffusée par le second dispositif servant d'identité montante selon un mode de balayage de canal;
l'établissement d'une connexion avec le second dispositif servant d'identité montante via le port de liaison montante.

8. Un dispositif de réseau, comprenant:
au moins un processeur (1101); et
au moins une mémoire (1102);
la mémoire (1102) stockant une instruction pouvant être exécutée par ledit au moins un processeur (1101), et lorsque ladite instruction est exécutée par ledit au moins un processeur (1101), ce dernier étant apte à exécuter le procédé de transmission sans fil selon l'une quelconque des revendications 1 à 7.

9. Un support de stockage lisible par ordinateur, stockant un programme informatique, ledit programme informatique étant conçu pour être exécuté par un processeur afin de mettre en œuvre le procédé de transmission sans fil selon l'une quelconque des revendications 1 à 7.
